# EUROPEAN PATENT SPECIFICATION

(11) **EP 2 186 628 B1**
(45) Date of publication and mention of the grant of the patent: **19.04.2017**
(21) Application number: 08778333.8
(22) Date of filing: 23.07.2008
(51) Int. Cl.: B29C 73/16, F16K 15/20, B60S 5/04, B29L 30/00

(54) **VALVE ADAPTOR AND SEALING/PUMP-UP DEVICE WITH THE SAME**
VENTILADAPTER UND DICHTUNGS-/AUFPUMPVORRICHTUNG DAMIT
RACCORD DE VALVE ET DISPOSITIF D'ÉTANCHÉITÉ/DE GONFLAGE ASSOCIÉ

(30) Priority: 27.07.2007 JP 2007196244
(43) Date of publication of application: 19.05.2010
(73) Proprietor: Bridgestone Corporation, Tokyo 104-8340 (JP)
(72) Inventor: YOSHIDA, Masaki, Tokyo 104-8340 (JP); INOUE, Yusuke, Tokyo 104-8340 (JP); TAKEDA, Yuji, Tokyo 104-8340 (JP)
(74) Representative: Oxley, Robin John George
(86) International application number: PCT/JP2008/063168
(87) International publication number: WO 2009/017000

(56) References cited:
- GB-A- 933 118
- JP-A- H10 204 219
- JP-A- 2007 076 104
- JP-A- 2007 182 036
- JP-A- 2007 182 036
- JP-U- S5 241 517
- JP-Y2- S 562 566
- US-A- 4 276 898

## Description

### TECHNICAL FIELD

The present invention relates to a valve adaptor to be attached to a tire valve for supplying a sealing agent and pressurized air into a punctured pneumatic tire, and to a sealing/pump-up device that is equipped with the valve adapter.

### BACKGROUND ART

In Patent Reference 1, a sealing/pump-up device is recited that, when a pneumatic tire is punctured, repairs the tire with a sealing agent and pumps up the tire internal pressure to a specified pressure, without the tire and wheel being replaced.

According to this sealing/pump-up device, a valve adapter provided at a distal end portion of a joint hose is attached to a tire valve of the punctured pneumatic tire, a sealing agent is infused through the joint hose and, thereafter, compressed air is supplied into the tire and the internal pressure of the pneumatic tire is pressurized.

In this sealing/pump-up device, a depressurization valve is provided at a middle portion of the joint hose. After the compressed air has been supplied into the tire, this depressurization valve may be opened and pressure in the tire adjusted. JP2007-182036 discloses a connector and a connector set for a tire and a hose.

Patent Reference 1: Japanese Patent Application Laid-Open (JP-A) No. 2007-76104

GB 933 118 A discloses the preamble of claim 1.

### DISCLOSURE OF INVENTION

### PROBLEM TO BE SOLVED BY THE INVENTION

However, when a depressurization valve provided on a fluid supply hose (the joint hose) is opened, sealing agent that remains in the device may be released together with the air.

An object of the present invention, in consideration of the above circumstances, is to release air in a tire without releasing a sealing agent remaining in a device.

### MEANS FOR SOLVING THE PROBLEM

A valve adapter relating to claim 1 of the present invention is a valve adaptor to be provided at a distal end portion of a fluid supply hose of a sealing/pump-up device.

According to the above-described structure, the valve adaptor provided at the distal end portion of the fluid supply hose of a sealing/pump-up device is put into the first state, in which it is threadedly engaged with the tire valve of the punctured pneumatic tire.

When put into the first state, the controller opens the tire valve and the valve adapter. In this state, the sealing agent is infused into the tire and, after the sealing agent infusion, compressed air is supplied and the internal pressure of the tire is pressurized.

After the compressed air has been supplied into the tire, when air in the tire is to be released and the internal pressure of the tire adjusted, the valve adapter is loosened and put from the first state into the second state.

When the valve adapter is put from the first state to the second state, the controller opens the tire valve such that air in the tire is released to the outside, and closes the valve adaptor such that sealing agent and air are not released from the fluid supply hose to the outside.

Thus, by the controller closing the valve adapter, air in the tire may be released without sealing agent that remains in the sealing/pump-up device being released.

In a valve adapter relating to claim 1 of the present invention, the controller according to claim 1 is provided with: an outer shell member that threadedly engages with an outer peripheral face of the tire valve; a packing member that is provided in intimate contact with an inner face of the outer shell member, that is in intimate contact with an opening edge of the tire valve in the first state and is separated from the opening edge in the second state and the third state, and at which a through aperture is provided that penetrates from the fluid supply hose side thereof to the tire valve side; a pressing member that penetrates through the through aperture of the packing member and presses an on/off valve provided at the tire valve; an urging member that urges the pressing member toward the tire valve and that, in the first state and the second state, presses the pressing member and opens the on/off valve; an intimate contact section that is provided at an outer face of the pressing member and that, in the second state and the third state, is in intimate contact with the packing member due to pressing force of the pressing member and prevents the sealing agent and air being released to outside from the fluid supply hose; and a releaser that is provided at the outer shell member and releases air released through the tire valve to the outside.

According to the above-described structure, the packing member is provided in intimate contact with the inner face of the outer shell member that is threadedly engaged with the outer peripheral face of the tire valve.

The packing member is also in intimate contact with the opening edge of the tire valve in the first state, and is separated from the opening edge of the tire valve in the second state and the third state.

The pressing member, which presses the on/off valve provided in the tire valve, penetrates through the through aperture provided in the packing member.

The urging member, which urges the pressing member toward the tire valve, presses the pressing member and opens the on/off valve of the tire valve in the first state and the second state.

In the second state and the third state, the intimate contact member, which is provided at the outer face of the pressing member, is in intimate contact with the packing member due to the pressing force of the urging member, and prevents the sealing agent and air being released to the outside from the fluid supply hose.

That is, when the valve adapter is put into the second state, the pressing member that is pressed by the urging member opens the on/off valve of the tire valve. Further, because the on/off valve is opened, air released from inside the tire flows between the opening edge of the tire valve and the packing member and is released to the outside by the releaser.

In the second state, the packing member and the intimate contact section are in intimate contact due to the pressing force of the urging member, and the sealing agent and air are prevented from being released to the outside through the fluid supply hose.

Thus, by the valve adapter being put into the second state, air in the tire may be released without sealing agent that remains in the sealing/pump-up device being released.

A valve adapter relating to claim 2 of the present invention is that recited in claim 1, wherein a valve section that spreads outward in radial directions is provided at the on/off valve provided at the tire valve, a protrusion portion that makes intimate contact with the valve section and closes the tire valve is provided at an inner peripheral face of the tire valve, and a valve section urging member that urges the valve section to the protrusion portion and causes the valve section to make intimate contact with the protrusion portion is provided inside the tire valve, and an urging force of the pressing member is stronger than an urging force of the valve section urging member.

According to the above-described structure, because the urging force of the urging member is stronger than the urging force of the valve section urging member, the tire valve may be opened and the valve adapter closed in the second state, reliably.

A valve adapter relating to claim 1 of the present invention comprises a female screw thread section that threadedly engages with a male screw thread section provided at the tire valve is provided at the outer shell member, and the releaser is a through groove section that is provided at the female screw thread section and formed from an opening portion of the outer shell member toward the packing member.

According to the above-described structure, the female screw thread section that threadedly engages with the male screw thread section of the tire valve is provided at the outer shell member. The releaser is provided at this female screw thread section, and is the through groove section that is formed from the opening portion of the outer shell member toward the packing member.

Therefore, air in the tire that is released between the opening edge of the tire valve and the packing member is released to the outside through this through groove section.

A valve adapter relating to claim 1 of the present invention comprises a female screw thread section that threadedly engages with a male screw thread section provided at the tire valve is provided at the outer shell member, and the releaser is a through hole that penetrates from the female screw thread section to an outer surface of the outer shell member.

According to the above-described structure, the female screw thread section that threadedly engages with the male screw thread section of the tire valve is provided at the outer shell member. The releaser is the through hole that penetrates from the female screw thread section to the outer face of the outer shell member.

Therefore, air in the tire that is released between the opening edge of the tire valve and the packing member is released to the outside through this through hole.

A sealing/pump-up device relating to claim 3 of the present invention supplies a sealing agent and compressed air into a tire, and is provided with a valve adapter according to claim 1 or claim 2.

According to the above-described structure, the valve adapter recited in of claim 1 or claim 2 is provided at the sealing/pump-up device.

Therefore, air in the tire may be released and air pressure in the tire adjusted without sealing agent that remains in the sealing/pump-up device being released through the valve adapter.

### EFFECT OF THE INVENTION

According to the present invention, air in a tire may be released without sealing agent remaining in the device being released.

### BRIEF DESCRIPTION OF DRAWINGS

Fig. 1A is a sectional view showing a valve adapter relating to a first exemplary embodiment of the present invention, and illustrating a second state thereof.
Fig. 1B is a sectional view showing the valve adapter relating to the first exemplary embodiment of the present invention, and illustrating a third state thereof.
Fig. 2A is a sectional view showing the valve adapter relating to the first exemplary embodiment of the present invention, and illustrating a state detached from a tire valve.
Fig. 2B is a sectional view showing the valve adapter relating to the first exemplary embodiment of the present invention, and illustrating a first state thereof.
Fig. 3A is a sectional view illustrating an outer shell member of the valve adapter relating to the first exemplary embodiment.
Fig. 3B is a perspective view illustrating the outer shell member of the valve adapter relating to the first exemplary embodiment.
Fig. 4 is a sectional view illustrating a sealing/pump-up device in which the valve adapter relating to the first exemplary embodiment is employed.
Fig. 5A and Fig. 5B are sectional views illustrating the sealing/pump-up device in which the valve adapter relating to the first exemplary embodiment is employed.
Fig. 6 is a perspective view illustrating the sealing/pump-up device in which the valve adapter relating to the first exemplary embodiment is employed.
Fig. 7A is a sectional view illustrating an outer shell member of a valve adapter relating to a second exemplary embodiment.
Fig. 7B is a perspective view illustrating the outer shell member of the valve adapter relating to the second exemplary embodiment.

### BEST MODE FOR CARRYING OUT THE INVENTION

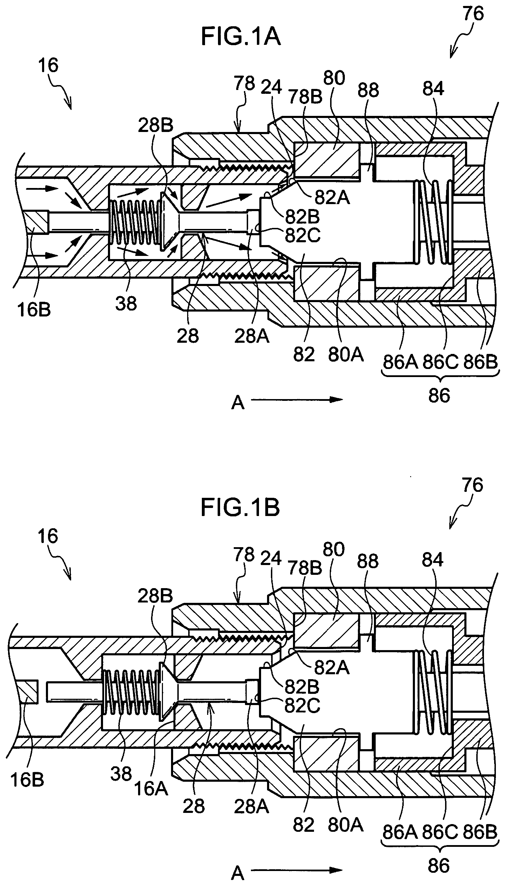

A sealing/pump-up device in which a valve adaptor relating to a first exemplary embodiment of the present invention is employed is described in association with Fig. 1 to Fig. 6.

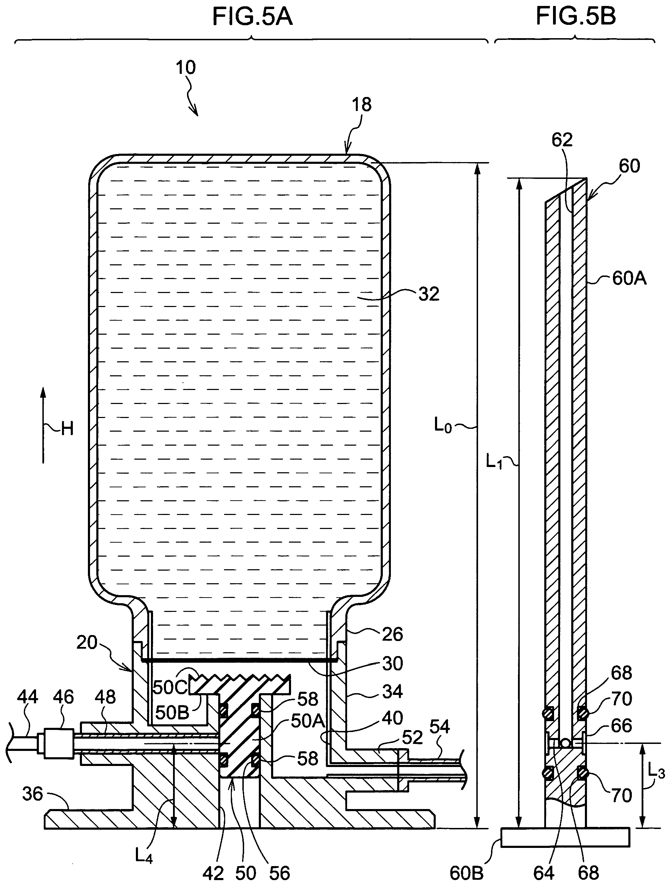

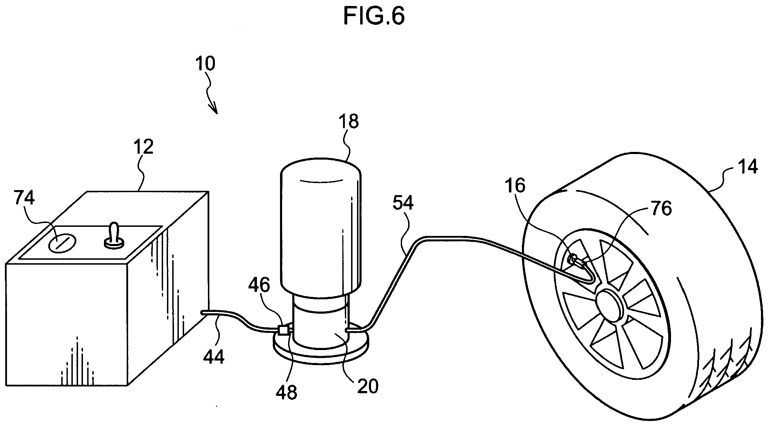

In Fig. 6, a sealing/pump-up device 10 (hereinafter referred to simply as the sealing device), in which a valve adaptor 76 relating to the first exemplary embodiment of the present invention is employed, is illustrated. When a pneumatic tire mounted to a vehicle such as an automobile or the like (hereinafter referred to simply as the tire) is punctured, rather than the tire and a wheel being replaced, the sealing device 10 fixes the tire with a sealing agent 32 (see Fig. 5) and re-pressurizes (pumps up) the internal pressure to a predetermined standard pressure.

This sealing device 10 is provided with a compressor unit 12, which serves as an air supplier. A motor, an air pump, a power supply circuit and suchlike are disposed inside the compressor unit 12, and a power cable (not illustrated), which extends from the power supply circuit to outside the unit, is provided at the compressor unit 12. A plug provided at a distal end portion of this power supply cable is inserted into, for example, a cigar lighter socket provided in the vehicle. Thus, a power supply may be supplied through the power supply circuit to the motor and the like from a battery mounted in the vehicle.

The compressor unit 12 is capable of producing pressurized air at a higher pressure than the standard pressures specified for each of types of tire 14 to be fixed by this air pump (for example, 300 kPa or above).

As illustrated in Fig. 5A, an agent container 18 and an infusion unit 20 are provided at the sealing device 10. The agent container 18 accommodates the sealing agent 32, and the agent container 18 is welded to the infusion unit 20. A substantially tubular outflow port 26, which protrudes downward, is integrally formed at a lower end of the agent container 18.

The outflow port 26 is formed with a diameter that is thinner than a container main body portion thereabove. An aluminium seal 30, for sealing the sealing agent 32 inside the agent container 18, is provided at an opening region (lower end) of the outflow port 26.

The agent container 18 is formed with a raw material thereof being a resin material of a type with gas barrier properties, a metallic material such as an aluminium alloy or the like, or the like. The sealing agent 32 is charged into the agent container 18 in slightly more than a specified amount (for example, 200 g to 400 g) that corresponds to types, sizes and the like of the tire 14 to be fixed by the sealing device 10 (see Fig. 6).

In the agent container 18 of the present exemplary embodiment, as illustrated in Fig. 5A, the sealing agent 32 is charged with no gap into the agent container 18, and an empty space is not formed. However, to prevent degeneration due to oxidation, nitriding and the like of the sealing agent 32, a small quantity of an inert gas such as argon or the like may be sealed into the agent container 18 along with the sealing agent 32 at a time of packing.

When the agent container 18 is put into a standing state with the outflow port 26 at the top side of the infusion unit 20 facing downward, the sealing agent 32 in the agent container 18 goes into a state of pressing against the aluminium seal 30 of the agent container 18 due to gravity.

A unit main body 34 and a foot section 36 are provided at the infusion unit 20. The unit main body 34 is formed in a substantially tubular shape. The foot section 36 extends to outer periphery sides from a lower end portion of the unit main body 34. A portion of the outflow port 26 of the agent container 18 is welded, in a pushed-in state, to an upper portion of the unit main body 34.

A substantially tubular pressurized liquid supply chamber 40 is provided in the unit main body 34. When the aluminium seal 30 is pierced, the pressurized liquid supply chamber 40 is in fluid communication with the inside of the agent container 18. Specifically, the right side in the drawing relative to the middle of the pressurized liquid supply chamber 40 is molded to be deeper than the left side in the drawing.

A jig insertion hole 42 is formed in the middle of the infusion unit 20. The jig insertion hole 42 has a circular cross-section extending in a vertical direction from a lower face toward the pressurized liquid supply chamber 40.

As illustrated in Fig. 6, a pressure-resistant hose 44, which extends from the compressor unit 12, is provided in the sealing device 10. In addition, as illustrated in Fig. 5A, a pressure pipe 48 is provided in the sealing device 10. The pressure pipe 48 extends from the infusion unit 20 and is detachably connected with the pressure-resistant hose 44 via a joint coupler 46.

A proximal end portion of this pressure-resistant hose 44 is connected to an air pump in the compressor unit 12. At a time of operation of the compressor unit 12 (see Fig. 6), pressurized air is produced by the air pump and supplied to the pressure-resistant hose 44. A distal end portion of the pressure pipe 48 passes through a peripheral wall section of the unit main body 34 and opens into a middle portion of the jig insertion hole 42 that extends in the vertical direction.

A shaft section 50A of a hole-closing member 50, which closes off the jig insertion hole 42, is inserted into the pressurized liquid supply chamber 40 side of the jig insertion hole 42. The hole-closing member 50 is provided with a disc-shaped hole-closing portion 50B, which broadens outward in radial directions, at the upper end of the shaft section 50A. Blades 50C, for making piercing of the aluminium seal 30 easier, are plurally formed at the upper face of the hole-closing portion 50B.

A pair of O-ring grooves 56 are formed in the shaft section 50A. An O-ring 58 is embedded in each O-ring groove 56.

The shaft section 50A is wholly inserted into the jig insertion hole 42, and a distal end portion of the pressure pipe 48 is closed off between the O-ring 58 and O-ring 58 of the shaft section 50A.

The shaft section 50A is held inside the jig insertion hole 42 by frictional force between the O-rings 58 and an inner peripheral surface of the jig insertion hole 42. In this state, the hole-closing portion 50B faces the middle of a front face of the aluminium seal 30, and a small gap is formed between the hole-closing portion 50B and the aluminium seal 30.

A joint hose 54 that serves as a fluid supply hose is provided in the sealing device 10. The joint hose 54 is connected, via an intermediate joining member (not illustrated), with a distal end portion of a joint section 52. The joint section 52 protrudes in a tubular shape in a horizontal direction from the unit main body 34. This joint hose 54 is a structure that is in fluid communication with the interior of the pressurized liquid supply chamber 40 via the joint section 52.

As illustrated in Fig. 6, the valve adaptor 76 is detachably connected, at a distal end portion of the joint hose 54, to the tire valve 16 of the tire 14. Herein, the valve adaptor 76 is described in detail later.

Anyway, as illustrated in Fig. 5B, a jig 60, which is used when the sealing agent 32 is to be discharged from the sealing device 10, is provided with a rod-shaped insertion section 60A and a disc-shaped base section 60B, which is integrally formed at one end of the insertion section 60A.

A first communication channel 62 is formed at a central region in the insertion section 60A. The first communication channel 62 extends toward the base section from a distal end at the opposite end from the base section. Second communication channels 64 are plurally formed in the insertion section 60A. The second communication channels 64 penetrate to the outer periphery from the base portion end side of the first communication channel 62. An annular groove 66 is formed in the outer peripheral face of the insertion section 60A. The groove 66 is an air channel at a region of opening of the second communication channels 64. A pair of O-ring grooves 68 are formed at the two sides of the groove 66. O-rings 70 are embedded in the O-ring grooves 68.

A distance L1 from the base section 60B of the jig 60 to the distal end of the first communication channel 62 is set to be shorter than a distance L0 from the lower face of the foot section 36 of the sealing device 10 to an upper wall face of the inside of the agent container 18 (see Fig. 5A). A distance L3 from the base section 60B of the jig 60 to the center of the second communication channels 64 is set to the same dimension as a distance L4 from the lower face of the foot section 36 of the sealing device 10 to the center of the pressure pipe 48 (see Fig. 5A).

Next, the valve adaptor 76, the tire valve 16 and the like are described in association with Fig. 1 to Fig. 3.

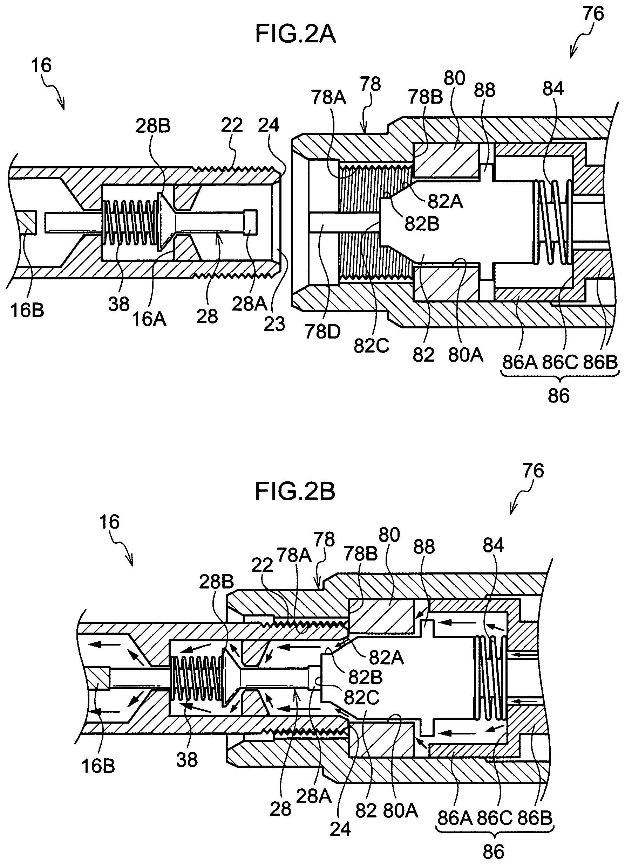

As illustrated in Fig. 2A, a screw thread section 22, to which the valve adaptor 76 is to be attached, is provided at an outer peripheral portion of the tubular tire valve 16. Inside the tire valve 16, the on/off valve 28 is provided, which releases air in the tire through a release aperture 23 of the tire valve 16 when pressed.

In detail, the on/off valve 28 is formed in a rod shape extending in the length direction of the tire valve 16, and is provided with a pressing section 28A and a protruding valve section 28B. The pressing section 28A is pressed by a pressing member 82, which will be described later. The valve section 28B makes intimate contact with a protrusion portion 16A provided inside the tire valve 16 and shuts air in the tire 14.

A distal end portion of a coil spring 38, which urges the valve section 28B so as to be in intimate contact with the protrusion portion 16A, abuts against the valve section 28B.

A stopper section 16B is provided inside the tire valve 16. When the on/off valve 28 is pressed by the pressing member 82 and the valve section 28B moves so as to compress the coil spring 38, the stopper section 16B abuts against the on/off valve 28 and limits movement of the on/off valve 28.

Meanwhile, a tubular outer shell member 78 with a step is provided at the valve adaptor 76. A screw thread section 78A, which threadedly engages with the screw thread section 22 of the tire valve 16, is provided at an inner peripheral face of the outer shell member 78.

A step section 78B is provided at a rear end (deeper side end portion) of the screw thread section 78A, so as to increase an internal diameter of the outer shell member 78. A tubular packing member 80 is provided inside the outer shell member 78 so as to be in intimate contact with the step section 78B and also such that an outer peripheral face thereof is in intimate contact with the inner peripheral face of the outer shell member 78. An inner diameter of the packing member 80 is determined such that an end face of the packing member 80 is in intimate contact with the opening edge 24 of the tire valve 16 when the screw thread section 78A of the valve adaptor 76 is threadedly engaged with the screw thread section 22 of the tire valve 16 and put into a first state (see Fig. 2A).

A through aperture 80A is provided at a central portion of the packing member 80. The through aperture 80A passes through the joint hose 54 side (see Fig. 6) and the tire valve 16 side. The cylindrical pressing member 82 is disposed at the central portion of the packing member 80 so as to pass through the through aperture 80A with a gap between the pressing member 82 and the packing member 80.

An angled section 82A is provided at a distal end portion of the pressing member 82 (at the on/off valve 28 side), such that the outer diameter becomes smaller. A flat face section 82C, which presses the pressing section 28A, is provided at the distal end portion of the pressing member 82, with a step section 82B between the flat face section 82C and the angled section 82A. The shape of the angled section 82A is determined such that a gap is formed between the angled section 82A and the opening edge 24 when the screw thread section 78A of the valve adaptor 76 threadedly engages with the screw thread section 22 of the tire valve 16 and is put into the first state (see Fig. 2B).

Meanwhile, a distal end portion of a coil spring 84, which serves as an urging member that urges the pressing member 82 toward the tire valve 16, abuts against a rear end portion of the pressing member 82. At a fixed member 86, a large diameter tube section 86A, which is fixed to the inner peripheral face of the outer shell member 78, is connected with a small diameter tube section 86B. The coil spring 84 is disposed inside the large diameter tube section 86A of the fixed member 86. A rear end portion of the coil spring 84 abuts against a step section 86C, which connects the large diameter tube section 86A with the small diameter tube section 86B.

A protruding intimate contact section 88 is provided at the outer peripheral face of the pressing member 82 so as to encircle the outer peripheral face. The intimate contact section 88 and the packing member 80 are put into intimate contact by the urging force of the coil spring 84.

A spring constant K1 of the coil spring 84 is set to be larger than a spring constant K2 of the coil spring 38 that urges the on/off valve 28.

That is, in the first state in which the valve adaptor 76 is attached to the tire valve 16 (see Fig. 2B), the on/off valve 28 is pressed by the pressing member 82 that is pressed by the coil spring 84, the coil spring 38 is compressed, and the valve section 28B is separated from the tire valve 16.

In the first state illustrated in Fig. 2B, the on/off valve 28, of which the valve section 28B moves away from the protrusion portion 16A, abuts against the stopper section 16B and the on/off valve 28 is stopped. Because the on/off valve 28 is stopped, the pressing member 82 is pressed by the on/off valve 28, the coil spring 84 compresses, and the intimate contact section 88 and the packing member 80 separate.

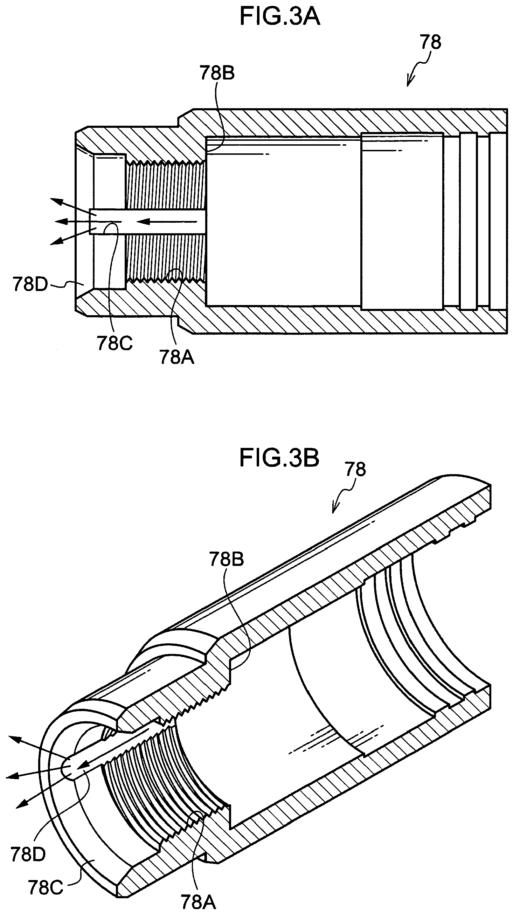

Meanwhile, as illustrated in Fig. 3, a through groove section 78D is provided at the screw thread section 78A of the outer shell member 78, so as to cut across the screw thread section 78A from an opening portion 78C of the outer shell member 78 toward the packing member 80 (see Fig. 2), to serve as a releaser.

With this structure, as illustrated in Fig. 2A, in a state in which the valve adaptor 76 is detached from the tire valve 16, the valve section 28B of the tire valve 16 is urged by the coil spring 38 and makes intimate contact with the protrusion portion 16A. Therefore, the tire valve 16 closes such that air in the tire 14 is not released to the outside.

Further, the intimate contact section 88 provided at the outer peripheral face of the pressing member 82 is in intimate contact with the packing member 80 due to the urging force of the coil spring 84. Therefore, the valve adaptor 76 closes such that the sealing agent and air or the like are not released to the outside through the joint hose 54 (see Fig. 6).

Thus, in the state in which the valve adaptor 76 is detached from the tire valve 16, the tire valve 16 and the valve adaptor 76 are closed.

In the first state, in which, as illustrated in Fig. 2B, the screw thread section 78A provided at the valve adaptor 76 threadedly engages with the screw thread section 22 provided at the tire valve 16 and the valve adaptor 76 is attached to the tire valve 16, the pressing section 28A of the on/off valve 28 of the tire valve 16 is pressed by the pressing member 82, the coil spring 38 compresses, and the valve section 28B of the on/off valve 28 and the protrusion portion 16A are separated. Therefore, the tire valve 16 opens such that air in the tire 14 is in fluid communication with the outside.

When the pressing member 82 presses the on/off valve 28, the on/off valve 28 abuts against the stopper section 16B, and the on/off valve 28 stops. The stopped on/off valve 28 abuts against the pressing member 82 and the coil spring 84 is compressed. By the coil spring 84 being compressed, the intimate contact section 88 provided at the outer peripheral face of the pressing member 82 is separated from the packing member 80.

Therefore, sealing agent and air that have passed through the inside of the fixed member 86 pass between the intimate contact section 88 and the packing member 80 as shown by the arrows in the drawings, further pass between the pressing member 82 and the packing member 80, still further pass between the angled section 82A of the pressing member 82 and the opening edge 24, and are released to the outside. That is, the valve adaptor 76 is opened.

Because the opening edge 24 of the tire valve 16 and the packing member 80 are in intimate contact, the sealing agent and air flowing from the valve adaptor 76 are not leaked to the outside.

Thus, the tire valve 16 and the valve adaptor 76 are opened, and the opening edge 24 and the packing member 80 are put into intimate contact. Thus, the sealing agent and air flowing from the valve adaptor 76 may be supplied through the tire valve 16 into the tire 14 as shown by the arrows in the drawings, without leaking to the outside.

As illustrated in Fig. 1A, when the outer shell member 78 is turned and the valve adaptor 76 is loosened and put from the first state (see Fig. 2B) into the second state, because the spring constant K1 of the coil spring 84 is set to be larger than the spring constant K2 of the coil spring 38 as mentioned above, the coil spring 84 extends, the pressing section 28A of the on/off valve 28 of the tire valve 16 is pressed by the pressing member 82, and the state in which the valve section 28B of the on/off valve 28 and the protrusion portion 16A are separated is maintained. Hence, the tire valve 16 is opened such that air in the tire 14 is released to the outside.

By the outer shell member 78 being moved in a direction away from the tire valve 16 (the direction of arrow A), the packing member 80 is moved in a direction approaching the intimate contact section 88. The coil spring 84 extends as mentioned above, and urges the intimate contact section 88 against the packing member 80, putting them into intimate contact. Therefore, the valve adaptor 76 closes such that sealing agent and air are not released to the outside through the joint hose 54 (see Fig. 6).

By the packing member 80 moving in the direction of arrow A, the opening edge 24 of the tire valve 16 and the packing member 80 are separated.

Thus, by the valve adaptor 76 being put into the second state, the tire valve 16 is opened and the valve adaptor 76 is closed, and the opening edge 24 and the packing member 80 are separated. Therefore, air in the tire 14 is released through the tire valve 16 as shown by the arrows in the drawing, flows between the opening edge 24 and the packing member 80, and is released to the outside through the through groove section 78D provided in the screw thread section 78A of the outer shell member 78, which is illustrated in Fig. 3.

As illustrated in Fig. 1B, when the outer shell member 78 is turned and the valve adaptor 76 is loosened and put from the second state (see Fig. 1A) into the third state, in association with the outer shell member 78 moving in the direction of arrow A away from the tire valve 16, the pressing member 82 is pressed by the packing member 80 and also moves in the direction of arrow A.

Because the pressing member 82 moves in the direction of arrow A, the valve section 28B of the tire valve 16 makes intimate contact with the protrusion portion 16A due to the urging force of the coil spring 38. Therefore, the tire valve 16 closes.

Meanwhile, the valve adaptor 76 maintains the state of intimate contact between the packing member 80 and the intimate contact section 88. Therefore, the closed valve adaptor 76 is kept in this state.

Thus, the tire valve 16 and the valve adaptor 76 close up.

Next, an operational procedure of repairing the punctured tire 14 using the sealing device 10 relating to the present exemplary embodiment is described.

As illustrated in Fig. 6, when a puncture has occurred in the tire 14, firstly, an operator screws the valve adaptor 76 of the joint hose 54 onto the tire valve 16 of the tire 14, and puts the pressurized liquid supply chamber 40 (see Fig. 5A) into fluid communication with the interior of the tire 14 through the joint hose 54.

Specifically, in the first state as illustrated in Fig. 2B, the pressing member 82 provided at the valve adaptor 76 presses against the pressing section 28A of the on/off valve 28 of the tire valve 16 and separates the valve section 28B and the protrusion portion 16A. Thus, the tire valve 16 opens.

The on/off valve 28, which is stopped by the stopper section 16B, presses against the pressing member 82 and compresses the coil spring 84. Therefore, the packing member 80 and the intimate contact section 88 provided at the outer peripheral face of the pressing member 82 separate, and the valve adaptor 76 opens.

Thus, by the tire valve 16 and the valve adaptor 76 opening, the pressurized liquid supply chamber 40 (see Fig. 5A) is put into fluid communication with the interior of the tire 14 through the joint hose 54.

Then, the operator inserts the insertion section 60A of the jig 60 illustrated in Fig. 5B into the jig insertion hole 42 of the sealing device 10 illustrated in Fig. 5A, and the base section 60B of the jig 60 penetrates into the foot section 36 of the sealing device 10.

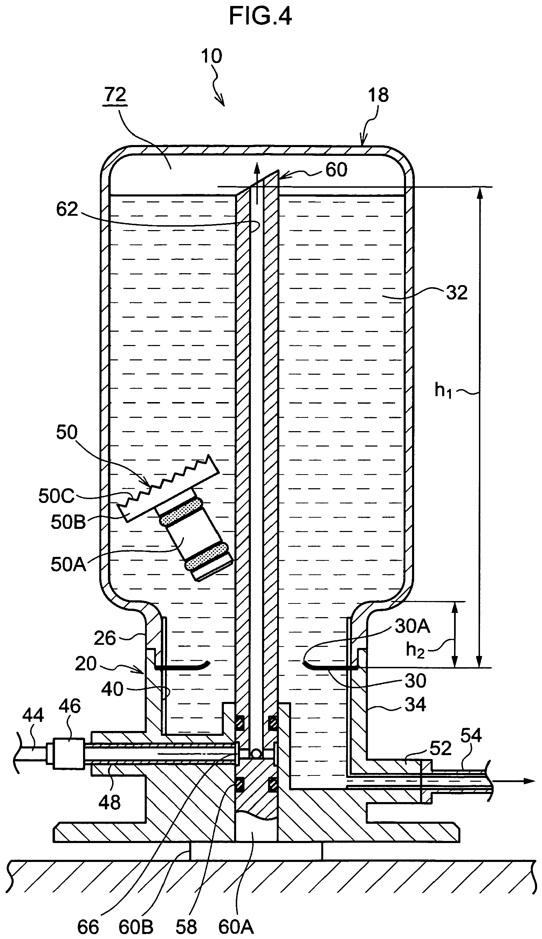

As illustrated in Fig. 4, the hole-closing portion 50B of the hole-closing member 50, which is pushed by the insertion section 60A, breaks through the aluminium seal 30 and is pushed into the interior of the agent container 18, and the insertion section 60A advances into the interior of the agent container 18. Thereafter, the sealing device 10 is disposed on, for example, a road surface, such that the foot section 36 is below and the agent container 18 is above.

When the insertion section 60A of the jig 60 is inserted into the jig insertion hole 42 of the sealing device 10, the distal end of the insertion section 60A is disposed close to an upper wall face inside the agent container 18, and the sealing agent 32 in the agent container 18 flows into the pressurized liquid supply chamber 40 via an annular gap between a hole 30A that is formed in the aluminium seal 30 and the insertion section 60A. Therefore, a space 72 is formed at an upper portion of the interior of the agent container 18, corresponding to a volume of the sealing agent 32 that flows out into the pressurized liquid supply chamber 40, and an end portion of the first communication channel 62 that opens at the distal end of the insertion section 60A may be disposed at the upper side relative to the liquid surface of the sealing agent 32.

Then the compressor unit 12 is operated, while the infusion unit 20 and the agent container 18 are retained such that the agent container 18 is disposed above the infusion unit 20. Pressurized air produced by the compressor unit 12 is supplied to the agent container 18 via the pressure-resistant hose 44, the pressure pipe 48, the second communication channels 64 of the jig 60 and the first communication channel 62. As mentioned above, the end portion of the first communication channel 62 is disposed at the upper side relative to the liquid surface of the sealing agent 32. Therefore, the pressurized air does not form bubbles and ascend within the sealing agent 32.

When the pressurized air is supplied to the agent container 18, the volume of the space 72 formed at the upper portion of the agent container 18 expands and pressurizes the sealing agent 32, and the pressurized sealing agent 32 flows through the annular gap between the hole 30A formed in the aluminium seal 30 and the insertion section 60A, and is supplied through the pressurized liquid supply chamber 40, the joint hose 54 and the valve adaptor 76 (see Fig. 6) into the tire 14.

After all the sealing agent 32 in the agent container 18 has been drained, the sealing agent 32 in the pressurized liquid supply chamber 40 is pressurized and is supplied through the joint hose 54 into the tire 14.

Thereafter, when the sealing agent 32 has been discharged from the sealing device 10, the pressurized air is supplied into the tire 14 via the agent container 18, the pressurized liquid supply chamber 40 and the joint hose 54 so as to be slightly higher than the specified pressure.

Then, as illustrated in Fig. 1A, the operator turns the outer shell member 78 and loosens the valve adaptor 76, putting it from the first state (see Fig. 2B) to the second state.

When the valve adapter is put into the second state, as described above, the valve adaptor 76 is closed, and air in the tire 14 is released through the tire valve 16, flows between the opening edge 24 and the packing member 80, and is released to the outside through the through groove section 78D provided in the screw thread section 78A of the outer shell member 78, which is illustrated in Fig. 3.

Thus, air in the tire 14 may be released until the tire 14 is at the specified pressure.

When checking the internal pressure of the tire 14 with a pressure gauge 74 (see Fig. 6) that is provided at the compressor unit 12, the operator may check the internal pressure of the tire 14 with the pressure gauge 74 by again attaching the valve adaptor 76 to the tire valve 16.

Thus, because air in the tire 14 may be released in the state in which the valve adaptor 76 is closed, the air in the tire 14 may be released and the air pressure of the tire 14 adjusted without releasing sealing agent that remains in the sealing device 10.

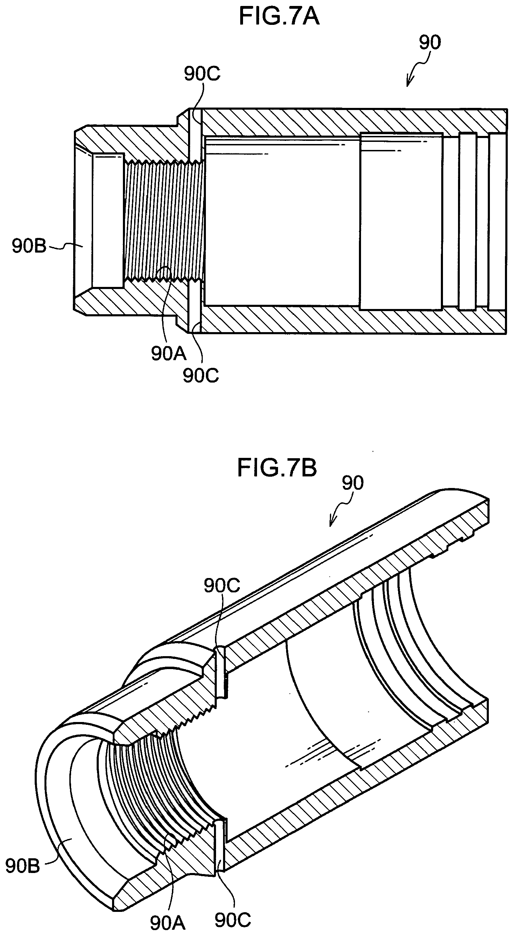

Next, a sealing device in which a valve adaptor relating to a second exemplary embodiment of the present invention is employed is described in association with Fig. 7.

Herein, members that are the same as in the first exemplary embodiment are assigned the same reference numerals and descriptions thereof are not given.

In this exemplary embodiment, a through groove section is not provided at an outer shell member 90. Instead, through holes 90C provided at the rearward of a screw thread section 90A (an end portion at an opposite side thereof from an opening portion 90B). The through holes 90C penetrate from the screw thread section 90A to an outer surface of the outer shell member 90.

Thus, in the second state of the valve adaptor 76, air released through the tire valve 16 from the interior of the tire flows through the through holes 90C and is released to the outside.

### EXPLANATION OF REFERENCE NUMERALS

- 10: Sealing device (sealing/pump-up device)
- 14: Tire
- 16: Tire valve
- 22: Screw thread section (male screw thread section)
- 54: Joint hose (fluid supply hose)
- 76: Valve adaptor
- 78: Outer shell member
- 78A: Screw thread section (female screw thread section)
- 78D: Through groove section
- 80: Packing member
- 82: Pressing member
- 84: Coil spring (urging member)
- 88: Intimate contact section
- 90: Outer shell member
- 90A: Screw thread section (female screw thread section)
- 90C: Through holes

## Claims

1. A valve adaptor (76) provided at a distal end portion of a fluid supply hose (54) of a sealing/pump-up device (10) that, after infusing a sealing agent into a punctured pneumatic tire (14), supplies compressed air and pressurizes internal pressure of the tire, the valve adaptor being attached to a tire valve (16) of the tire, and comprising:
a controller that,
in a first state in which the valve adapter is threadedly engaged with the tire valve, opens the tire valve and the valve adapter,
in a second state in which the valve adapter is loosened from the first state, opens the tire valve and closes the valve adapter, and
in a third state in which the valve adapter is loosened from the second state, closes the tire valve and the valve adapter, **characterised in that** the controller comprises:
an outer shell member (78) that threadedly engages with an outer peripheral face of the tire valve;
a packing member (80) that is provided in intimate contact with an inner face of the outer shell member, that is in intimate contact with an opening edge of the tire valve in the first state and is separated from the opening edge in the second state and the third state, and at which a through aperture is provided that penetrates from the fluid supply hose side thereof to the tire valve side;
a pressing member (82) that penetrates through the through aperture of the packing member and presses an on/off valve provided at the tire valve;
an urging member that urges the pressing member toward the tire valve and that, in the first state and the second state, presses the pressing member and opens the on/off valve;
an intimate contact section (88) that is provided at an outer face of the pressing member and that, in the second state and the third state, is in intimate contact with the packing member due to pressing force of the urging member and prevents the sealing agent and air being released to outside from the fluid supply hose; and
a releaser that is provided at the outer shell member and releases air released through the tire valve to the outside; wherein
a female screw thread section (78A, 90A) that threadedly engages with a male screw thread (22) section provided at the tire valve is provided at the outer shell member, and the releaser is a through groove section (78D) that is provided at the female screw thread section (78A) and formed from an opening portion of the outer shell member toward the packing member or the releaser is a through hole (90C) that penetrates from the female screw thread (90A) section to an outer surface of the outer shell member.

2. The valve adaptor according to claim 1, wherein
a valve section that spreads outward in radial directions is provided at the on/off valve provided at the tire valve, a protrusion portion (16A) that makes intimate contact with the valve section and closes the tire valve is provided at an inner peripheral face of the tire valve, and a valve section urging member (84) that urges the valve section to the protrusion portion and causes the valve section to make intimate contact with the protrusion portion is provided inside the tire valve, and
an urging force of the urging member is stronger than an urging force of the valve section urging member.

3. A sealing/pump-up device (10), wherein the sealing/pump-up device supplies a sealing agent and compressed air into a tire, and includes a valve adapter (76) according to claim 1 or claim 2.

## Patentansprüche

1. Ventiladapter (76), befindlich an einem distalen Endabschnitt eines Fluidzufuhrschlauchs (54) einer Dichtungs-/Aufpumpvorrichtung (10), der nach Infusion eines Dichtmittels in einen beschädigten Luftreifen (14) Druckluft zufügt und den Innendruck des Reifen unter Druck setzt, wobei der Ventiladapter an einem Reifenventil (16) des Reifens befestigt ist und folgendes umfasst:
ein Steuergerät, das:
in einem ersten Zustand, in dem der Ventiladapter in Schraubeingriff mit dem Reifenventil ist, das Reifenventil und den Ventiladapter öffnet,
in einem zweiten Zustand, in dem der Ventiladapter aus dem ersten Zustand gelöst ist, das Reifenventil öffnet und den Ventiladapter verschließt,
in einem dritten Zustand, in dem der Ventiladapter aus dem zweiten Zustand gelöst ist, das Reifenventil und den Ventiladapter verschließt, **dadurch gekennzeichnet, dass** das Steuergerät Folgendes umfasst:
ein äußeres Schalenglied (78), das in Schraubeingriff mit einer äußeren Umfangsseite des Reifenventils steht;
ein Packungsglied (80), das in engem Kontakt mit einer inneren Seite des äußeren Schalenglieds vorhanden ist, welches in engem Kontakt mit einer Öffnungskante des Reifenventils im ersten Zustand steht und von der Öffnungskante im zweiten Zustand und im dritten Zustand getrennt ist, und an welchem eine Durchgangsöffnung vorhanden ist, die von der Fluidzufuhrschlauchseite hiervon zur Reifenventilseite vordringt;
ein Pressglied (82), das durch die Durchgangsöffnung des Packungsgliedes vordringt und ein Ein-/Aus-Ventil presst, das an dem Reifenventil vorhanden ist;
ein Druckglied, welches das Pressglied in Richtung des Reifenventils drückt und welches, im ersten Zustand und im zweiten Zustand, das Pressglied presst und das Ein-/Aus-Ventil öffnet;
einen engen Kontaktabschnitt (88), der an einer äußeren Seite des Pressglieds vorhanden ist und der, im zweiten Zustand und im dritten Zustand, in engem Kontakt mit dem Packungsglied steht und aufgrund der Presskraft des Druckglieds das Dichtmittel und Luft daran hindert, aus dem Fluidzufuhrschlauch nach außen abgelassen zu werden; und
einen Auslöser, der am äußeren Schalenglied vorhanden ist und Luft durch das Reifenventil nach außen ablässt, bei welchem
ein weiblicher Schraubgewindeabschnitt (78A, 90A), der in Schraubeingriff mit einem am Reifenventil vorhandenen männlichen Schraubgewindeabschnitt (22) steht, am äußeren Schalenglied vorhanden ist, und der Auslöser ein durchgehender Nutabschnitt (78D) ist, der an dem weiblichen Schraubgewindeabschnitt (78A) vorhanden ist und aus einem Öffnungsabschnitt des äußeren Schalengliedes in Richtung des Packungsgliedes gebildet wird, oder der Auslöser ein Durchgangsloch (90C) ist, das vom weiblichen Schraubgewindeabschnitt (90A) zu einer äußeren Seite des äußeren Schalengliedes vordringt.

2. Ventiladapter nach Anspruch 1, bei dem
ein sich auswärts in radialen Richtungen ausdehnender Ventilabschnitt an dem am Reifenventil vorhandenen Ein-/Aus-Ventil vorhanden ist, ein vorstehender Abschnitt (16A), der in engem Kontakt mit dem Ventilabschnitt steht und das Reifenventil verschließt, an einer inneren Umfangsseite des Reifenventils vorhanden ist, und ein Ventilabschnittdruckglied (84), das den Ventilabschnitt an den vorstehenden Abschnitt drückt und den Ventilabschnitt in engen Kontakt mit dem vorstehenden Abschnitt bringt, im Innern des Reifenventils vorhanden ist; und
eine Druckkraft des Druckgliedes stärker ist als eine Druckkraft des Ventilabschnittsdruckglieds.

3. Dichtungs-/Aufpumpvorrichtung (10), bei welcher die Dichtungs-/Aufpumpvorrichtung ein Dichtmittel und Druckluft in einen Reifen einlässt und einen Ventiladapter (76) nach Anspruch 1 oder 2 beinhaltet.

## Revendications

1. Adaptateur de valve (76) agencé au niveau d'une partie d'extrémité distale d'un tuyau d'alimentation de fluide (54) d'un dispositif d'étanchéité/de pompage (14), qui, après l'infusion d'un agent d'étanchéité dans un bandage pneumatique crevé (14), assure l'alimentation d'air comprimé et met le bandage pneumatique à une pression interne, l'adaptateur de valve étant fixé sur une valve de bandage pneumatique (16) du bandage pneumatique, et comprenant :
un moyen de commande, qui
dans un premier état, dans lequel l'adaptateur de valve est engagé par filetage dans la valve du bandage pneumatique, ouvre la valve du bandage pneumatique et l'adaptateur de valve ;
dans un deuxième état, dans lequel l'adaptateur de valve est dégagé du premier état, ouvre la valve du bandage pneumatique et ferme l'adaptateur de valve ; et
dans un troisième état, dans lequel l'adaptateur de valve est dégagé du deuxième état, ferme la valve du bandage pneumatique et l'adaptateur de valve ; **caractérisé en ce que** le moyen de commande comprend :
un élément de coque externe (78) s'engageant par filetage dans une face périphérique externe de la valve du bandage pneumatique ;
un élément de garniture (80) agencé en contact intime avec une face interne de l'élément de coque externe, c'est-à-dire en contact intime avec un bord d'ouverture de la valve du bandage pneumatique dans le premier état, et est séparé du bord d'ouverture dans le deuxième état et dans le troisième état, et au niveau duquel est agencée une ouverture de passage pénétrant à partir du côté du tuyau d'alimentation de fluide vers le côté de la valve du bandage pneumatique ;
un élément de pression (82) pénétrant à travers l'ouverture de passage de l'élément de garniture et exerçant une pression sur une valve marche/arrêt agencée au niveau de la valve du bandage pneumatique ;
un élément de poussée poussant l'élément de pression vers la valve du bandage pneumatique et qui, dans le premier état et dans le deuxième état, exerce une pression sur l'élément de pression et ouvre la valve marche/arrêt ;
une section à contact intime (88) agencée au niveau d'une face externe de l'élément de pression et qui est, dans le deuxième état et dans le troisième état, en contact intime avec l'élément de garniture par suite de la force de pression de l'élément de poussée, et empêchant la libération de l'agent d'étanchéité et de l'air vers l'extérieur à partir du tuyau d'alimentation de fluide ; et
un moyen de déclenchement agencé sur l'élément de coque externe et libérant l'air libéré à travers la valve du bandage pneumatique vers l'extérieur ; dans lequel
une section de filet de vis creuse (78A, 90A), s'engageant par filetage dans une section de filet de vis mâle (22) agencée au niveau de la valve du bandage pneumatique, est agencée au niveau de l'élément de coque externe le moyen de déclenchement étant constitué par une section de rainure de passage (78D) agencée au niveau de la section de filet de vis creuse (78A),un trou de passage (90C), pénétrant de la section de filet de vis creuse (90A) vers une surface externe de l'élément de coque creuse, étant formé d'une partie d'ouverture de l'élément de coque externe vers l'élément de garniture ou l'élément de déclenchement.

2. Adaptateur de valve selon la revendication 1, dans lequel :
une section de valve s'étendant vers l'extérieur dans des directions radiales, est agencée au niveau de la valve marche/arrêt agencée au niveau de la valve du bandage pneumatique, une partie en saillie (16A) entrant en contact intime avec la section de valve et fermant la valve du bandage pneumatique étant agencée au niveau d'une face périphérique interne de la valve du bandage pneumatique, et un élément de poussée de la section de valve (84), poussant la section de valve vers la partie en saillie et entraînant un contact intime entre la section de valve et la partie en saillie étant agencée à l'intérieur de la valve du bandage pneumatique ; et
une force de poussée de l'élément de poussée est plus forte qu'une force de poussée de l'élément de poussée de la section de valve.

3. Dispositif d'étanchéité/de pompage (10), dans lequel le dispositif d'étanchéité/de pompage amène un agent d'étanchéité et de l'air comprimé dans un bandage pneumatique, et englobe un adaptateur de valve (76) selon les revendications 1 ou 2.
